# EUROPEAN PATENT APPLICATION

(11) **EP 3 922 735 A1**
(43) Date of publication of application: **15.12.2021**
(21) Application number: 20191291.2
(22) Date of filing: 17.08.2020
(51) Int. Cl.: C21B 13/00, C22B 1/24, C22B 1/26

(54) **COOLING APPARATUS OF HOT BRIQUETTED IRON**

(30) Priority: 09.06.2020 KR 20200069632
(71) Applicant: Jeil Machinery Co., Ltd., Pohang-si Gyeongsangbuk-do 37876 (KR)
(72) Inventor: PARK, Sang Kui, 37591 Gyeongsangbuk-do (KR)
(74) Representative: Isarpatent

(57) **Abstract**

A cooling apparatus of hot briquetted iron is proposed. The cooling apparatus includes a cylindrical rotary body rotating while being inclined such that an outlet section through which cooled hot briquetted iron is discharged faces upwards, and including a water-level control plate formed under a hot-briquetted-iron charging section to retain a predetermined coolant; a blade formed along an inner circumferential surface of the rotary body to guide the hot briquetted iron introduced therein towards the outlet section; and a coolant spray module including a plurality of spray nozzles that differentially control an amount of the coolant sprayed inwards from the outlet section. The hot briquetted iron is primarily cooled by retained coolant, is guided by the blade, and is secondarily cooled by the coolant spray nozzles, thus maximizing cooling efficiency of the hot briquetted iron during a cooling process and thereby minimizing coolant consumption.

## Description

### CROSS REFERENCE TO RELATED APPLICATION

The present application claims priority to Korean Patent Application No. 10-2020-0069632, filed June 9, 2020, the entire contents of which are incorporated herein for all purposes by this reference.

### BACKGROUND OF THE INVENTION

### Field of the Invention

The present invention relates to a cooling apparatus of hot briquetted iron. More particularly, the present invention relates to a cooling apparatus of hot briquetted iron, which minimizes thermal shock of the hot briquetted iron due to a sudden change in temperature during a cooling process, thus preventing the hot briquetted iron from being damaged, and which induces an increase in cooling surface area and efficiently removes a vapor layer formed on a surface of the hot briquetted iron, thus improving the productivity of the hot briquetted iron.

### Description of the Related Art

Hot briquetted iron (HBI) is a scrap-iron substitute that is produced by processing direct reduction iron (DRI), which is obtained by removing oxygen from iron ore, using briquetting equipment. Since the hot briquetted iron is superior in quality to the scrap iron, the hot briquetted iron is mainly used to make a high-quality product such as an H-beam or a steel plate.

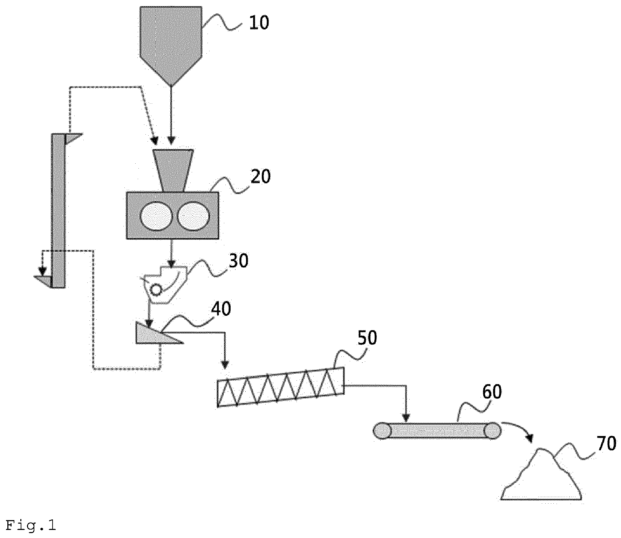

As shown in FIG. 1, a main process for producing hot briquetted iron is to produce DRI by removing oxygen from iron ore using a gas-phase reductant (CO, H₂) or a solid-phase reductant (carbon) for the iron ore. The DRI is moved to a storage bin 10 for temporarily storing or discharging the DRI, and then is introduced into a briquetting process. In other words, the hot DRI produced in a reducing-furnace process is moved to the briquetting machine 20 to manufacture the hot briquetted iron of about 600 to 700°C. After the manufactured hot briquetted iron passes through a separator 30 and a screen device 40, the hot briquetted iron is put into the cooling apparatus 50 to be cooled to 100°C or less. Thereafter, the hot briquetted iron that has been cooled is moved through a transfer conveyor 60 to a storage space 70.

As such, since the hot briquetted iron produced in a hot briquetting process should be cooled to about 100°C or less so as to be put into a following process, a cooling apparatus of the hot briquetted iron in a manufacturing plant of the hot briquetted iron is key equipment that determines an overall system operation rate.

Generally, a chain-type quench tank is widely used as the cooling apparatus of the hot briquetted iron. However, this is configured such that main components for driving the apparatus, such as a chain, a bearing, a roller, or a rail, are located in the cooling apparatus, so that they are operated along with coolant present in a lower portion of the apparatus during a production process. Therefore, these components may be frequently detached due to the coolant, thus reducing durability and increasing maintenance cost due to the frequent replacement of the components. Thus, the overall plant operation rate may be reduced by about 50%, production output may be reduced, and production cost may be increased.

Furthermore, the hot briquetted iron may become weak in the cooling process, and the weakened hot briquetted iron may generate powder-type detached matter during a transfer in the cooling apparatus, so that the detached matter may be accumulated therein. Consequently, a load on the equipment may be increased, and maintenance time for removal is required, thus negatively affecting a production output.

### Documents of Related Art

(Patent Document 1) Korean Patent No. 10-2077689 (Feb. 10, 2020)
(Patent Document 2) Korean Patent No. 10-0649732 (Nov. 17, 2006)

### SUMMARY OF THE INVENTION

The present invention has been made in order to solve the above-mentioned problems in the prior art and an objective of the present invention is to provide a cooling apparatus of hot briquetted iron, in which a component for driving the cooling apparatus is provided on an outside of the cooling apparatus, thus enhancing an equipment operation rate and improving productivity.

Another objective of the present invention is to provide a cooling apparatus of hot briquetted iron, in which a temperature distribution in the cooling apparatus is controlled to minimize the sudden cooling of the hot briquetted iron according to a position, thus increasing cooling efficiency for each position in a cooler and thereby minimizing coolant consumption.

Furthermore, a further objective of the present invention is to provide a cooling apparatus of hot briquetted iron, in which the hot briquetted iron is cooled while a movement mode thereof is changed in the cooling apparatus, thus inducing an increase in cooling surface area, and a vapor layer formed on a surface of the hot briquetted iron is efficiently eliminated, thus improving cooling efficiency.

Objectives of the present invention are not limited to the above-mentioned objectives, and those skilled in the art will clearly understand other effects from the following description.

In order to achieve the objectives of the present invention, the invention provides a cooling apparatus of hot briquetted iron, including a cylindrical rotary body rotating while being inclined such that an outlet section through which cooled hot briquetted iron is discharged faces upwards, and including a water-level control plate formed under a hot-briquetted-iron charging section to retain a predetermined coolant; a blade formed along an inner circumferential surface of the rotary body to guide the hot briquetted iron introduced therein towards the outlet section; and a coolant spray module including a plurality of spray nozzles that differentially control an amount of the coolant sprayed inwards from the outlet section, wherein the hot briquetted iron is primarily cooled by retained coolant, is guided by the blade, and is secondarily cooled by the coolant spray nozzles, thus maximizing cooling efficiency of the hot briquetted iron during a cooling process and thereby minimizing coolant consumption.

The coolant spray module may be differentially controlled such that a spray amount of a spray nozzle closest to the outlet section is maximum and a pressure loss is increased from a spray nozzle located at an outer position to a spray nozzle located at an inner position, thus reducing the coolant spray amount.

The coolant spray module may include a coolant supply pipe that is connected to the plurality of spray nozzles to supply the coolant to each spray nozzle at a constant pressure, and may differentially control the coolant spray amount by differentially applying diameters of the spray nozzles in a direction from the outlet section to an inside.

The coolant spray module may include a coolant supply pipe that is connected to the plurality of spray nozzles and is gradually reduced in the diameter of the pipe in a direction from the outlet section to an inside, thus increasing a pressure loss and thereby differentially controlling the coolant spray amount.

The blade may guide the hot briquetted iron such that the hot briquetted iron is moved towards the outlet section while changing a movement mode of the hot briquetted iron introduced into the rotary body.

The movement mode may include a slip mode of the charging section in which the hot briquetted iron performs a rotary movement at a minimum height to remain immersed in the retaining coolant, and a rolling mode of the outlet section in which an active rotary movement of the hot briquetted iron is induced to increase a contact surface area with the coolant sprayed to the coolant spray module.

The movement mode may include a fall mode between the charging section and the outlet section to induce a rotary movement of the hot briquetted iron that is more active than that in the slip mode.

The blades may be formed such that angles between the blades and an outer circumference of the rotary body are different from the charging section to the outlet section, thus changing the movement mode.

The rotary body may include on an outer end thereof a screen module that is used to separate coolant remaining on an outer circumference of the hot briquetted iron that is cooled and then discharged from the outlet section and the hot briquetted iron from each other.

The cooling apparatus may further include a rotary unit supporting an outside of the rotary body and rotating the rotary body.

A cooling apparatus of hot briquetted iron according to an embodiment of the present invention is advantageous in that a component for driving the cooling apparatus, such as a rotary unit, is provided on an outside of the cooling apparatus, thus enhancing an equipment operation rate and improving productivity. Furthermore, a temperature distribution in the cooling apparatus is controlled through retaining coolant and differentially sprayed coolant, thus minimizing the sudden cooling of the hot briquetted iron according to a position, and the cooling efficiency is increased for each position in a cooler, thus minimizing coolant consumption.

Moreover, the hot briquetted iron is cooled while a movement mode thereof is changed due to a blade for guiding the movement of hot briquetted iron in the cooling apparatus, thus preventing sudden cooling and increasing a cooling surface area, and a vapor layer formed on a surface of the hot briquetted iron is efficiently eliminated, thus improving cooling efficiency.

### BRIEF DESCRIPTION OF THE DRAWINGS

The above and other objectives, features, and other advantages of the present invention will be more clearly understood from the following detailed description when taken in conjunction with the accompanying drawings, in which:
FIG. 1 is a sectional view showing a process of producing hot briquetted iron;
FIG. 2 is a sectional view showing a cooling apparatus of hot briquetted iron according to an embodiment of the present invention;
FIG. 3 is a sectional view showing a rotary body of the cooling apparatus of the hot briquetted iron and a movement of the hot briquetted iron according to the embodiment of the present invention;
FIG. 4 is a diagram showing a blade of the cooling apparatus of the hot briquetted iron and a change in movement mode of the hot briquetted iron according to the embodiment of the present invention;
FIG. 5 is a front view showing the cooling apparatus of the hot briquetted iron according to the embodiment of the present invention, when seen from an outlet section; and
FIG. 6 is a sectional view taken along line A-A' of FIG. 2 to illustrate the rotary body and a rotary unit of the cooling apparatus of the hot briquetted iron according to the embodiment of the present invention.

### DETAILED DESCRIPTION OF THE INVENTION

Hereinafter, preferred embodiments of the present invention will be described in detail with reference to the accompanying drawings. The following embodiments are provided to fully convey the spirit of the present invention to those skilled in the art. Therefore, the present invention may be embodied in different forms without being limited to embodiments that will be described below. Moreover, in the drawings, the length or thickness of layers or areas may be exaggerated for the sake of convenience. The same reference numerals are used throughout the drawings to designate the same components.

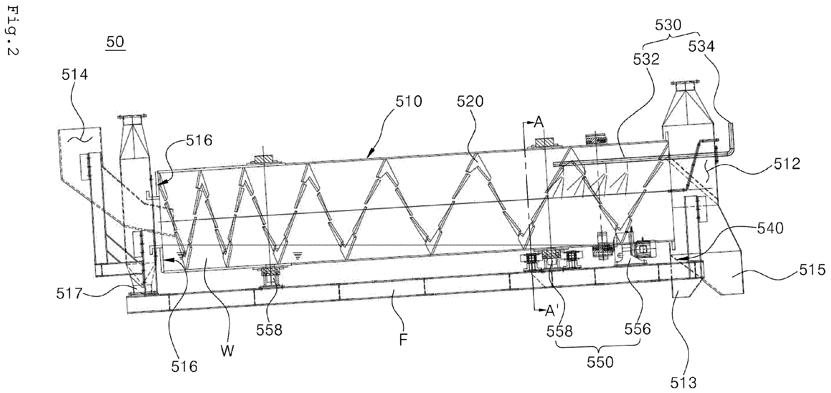

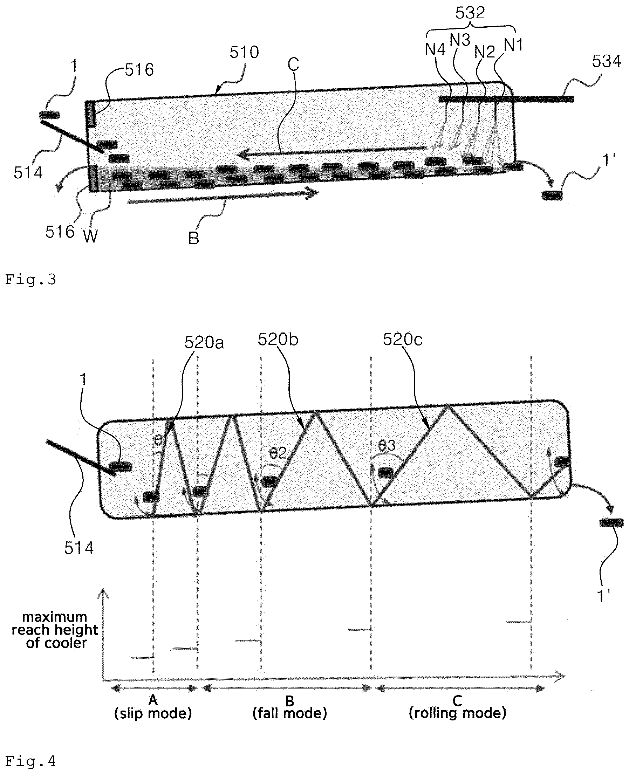

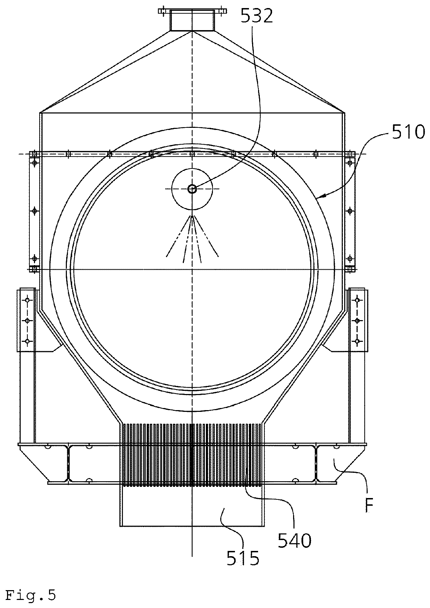

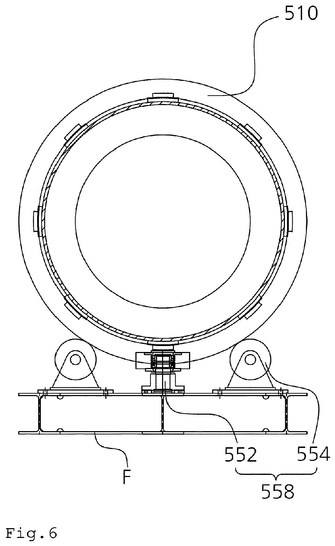

FIG. 1 is a sectional view showing a process of producing hot briquetted iron, FIG. 2 is a sectional view showing a cooling apparatus of hot briquetted iron according to an embodiment of the present invention, FIG. 3 is a sectional view showing a rotary body of the cooling apparatus of the hot briquetted iron and a movement of the hot briquetted iron according to the embodiment of the present invention, FIG. 4 is a diagram showing a blade of the cooling apparatus of the hot briquetted iron and a change in movement mode of the hot briquetted iron according to the embodiment of the present invention, FIG. 5 is a front view showing the cooling apparatus of the hot briquetted iron according to the embodiment of the present invention, when seen from an outlet section, and FIG. 6 is a sectional view taken along line A-A' of FIG. 2 to illustrate the rotary body and a rotary unit of the cooling apparatus of the hot briquetted iron according to the embodiment of the present invention.

Referring to FIGS. 1 to 6, the cooling apparatus 50 of the hot briquetted iron according to the embodiment of the present invention may include a cylindrical rotary body 510, a blade 520, and a coolant spray module 530.

The cooling apparatus 50 of the hot briquetted iron may include hot briquetted iron 1 that is a cooling target as well as char or cokes produced in a coal carbonization process. Moreover, the cooling apparatus 50 of the hot briquetted iron may be applied to a hot object of 200 °C or higher that is required to be cooled in various industrial fields including a steelmaking process.

The rotary body 510 may rotate while being inclined such that an outlet section 512 through which cooled hot briquetted iron 1' is discharged faces upwards, and a water-level control plate 516 may be formed under a hot-briquetted-iron charging section 514 to retain a predetermined coolant. In other words, because the coolant spray module 530 sprays the coolant, the coolant W may be retained in the rotary body 510. The rotary body 510 is inclined such that the charging section 514 into which the hot briquetted iron 1 is transferred and put is relatively low, and the outlet section 512 through which the hot briquetted iron is discharged is high. Thus, the level of the retaining coolant W may be reduced in a direction from the charging section 514 to the outlet section 512. The retaining coolant may secure a certain water level and an amount of the retaining coolant may be controlled according to the height of the water-level control plate 516. If a proper retaining amount is exceeded, the retaining coolant may flow out of the rotary body 510 and then may be discharged to a coolant discharge section 517. In other words, the level of the retaining coolant W in the charging section 514 may be the same as the height of the water-level control plate 516, and be from 200mm to 1000mm, for example.

Furthermore, the retaining coolant W heated by the hot briquetted iron located in an area adjacent to the charging section 514 may overflow and be discharged, thus preventing the retaining coolant W from rising above a certain temperature. The coolant that is continuously supplied through the coolant spray module 530 may overflow the water-level control plate 516 and then be discharged to an outside of the charging section 514, so that the coolant may flow out of the rotary body 510. This coolant is in a heated state, and the heated coolant flows into a cooling tower and then is cooled again. Thereafter, the coolant may be introduced through the coolant spray module 530 into the rotary body 510 by a coolant circulation pump.

An inclination of the rotary body 510 may range from 2 to 15°, and be determined according to the diameter and length of the rotary body 510. In other words, if the rotary body 510 is large in diameter and short in length, the inclination may be further increased.

Moreover, the rotary body 510 may further include a fan that emits vapor, generated while the hot briquetted iron is cooled, to the outside of the rotary body 510. The temperature in the rotary body 510 may be increased, or it may be difficult to cool the hot briquetted iron, due to the vapor that is generated while the hot briquetted iron 1 of about 550 to 700°C is cooled by the coolant. Therefore, the rotary body 510 may be provided with a pump to discharge the vapor, thus emitting the vapor to the outside of the rotary body 510.

The blade 520 may be formed along an inner circumferential surface of the rotary body 510 to guide the hot briquetted iron 1 introduced therein towards the outlet section 512. In other words, the hot briquetted iron 1 introduced from the charging section 514 may be transferred to the outlet section 512 by the blade 520 rotating along with the rotary body 510, and the hot briquetted iron 1 may be cooled while moving B in the rotary body 510. In order to effectively transfer and cool the hot briquetted iron 1, a width of the blade 520 may be three to ten times as large as a width or size of the hot briquetted iron 1.

The coolant spray module 530 may include a plurality of spray nozzles 532 that differentially control the amount of the coolant sprayed inwards from the outlet section 512. Therefore, the hot briquetted iron 1 is primarily cooled by the retained coolant W, is guided by the blade 520, and is secondarily cooled by the coolant spray nozzle 532, thus maximizing the cooling efficiency of the hot briquetted iron 1 during a cooling process and thereby minimizing coolant consumption.

In other words, as shown in FIG. 3, the retaining coolant W that is sprayed from the coolant spray nozzle 532, is moved in a direction C of the charging section 514, and is increased in temperature by the hot briquetted iron that is being cooled is present at a constant level in the rotary body 510 by the water-level control plate 516. By primarily cooling the hot briquetted iron 1 introduced into the charging section 514 using the retaining coolant, the consumption of the coolant may be minimized. Moreover, the hot briquetted iron 1 located in the rotary body 510 may be guided and moved B by the blade 520, so that the hot briquetted iron sequentially approaches the coolant spray nozzle 532 and is further cooled by the retaining coolant W that is decreased in temperature. Next, the hot briquetted iron that is moved under the coolant spray nozzle 532 is secondarily cooled by the coolant sprayed with the coolant spray nozzle 532, and then is transferred to the outside of the rotary body 510.

As such, the cooling apparatus 50 of the hot briquetted iron according to an embodiment of the present invention may perform a cooling operation in a counter-flow method where the flow C of cooling is formed in a direction opposite to a direction where the hot briquetted iron 1 is moved B in the rotary body 510, thus increasing cooling efficiency. In other words, a main cooling (secondary cooling) operation is performed by spraying the coolant in a hot-briquetted-iron discharge area, and a preliminary cooling (primary cooling) operation is performed using the structural shape of the rotary body 510 inclined upwards towards the coolant spray nozzle 532 and the retaining coolant W retained (increased in temperature by the main cooling of the hot briquetted iron) by the water-level control plate 516 installed in a coolant discharge area. Thus, it is possible to minimize the consumption of the coolant in a cooler by maximizing the use of the coolant for the hot briquetted iron that is charged from a first briquetting machine.

A coolant contact time between the hot briquetted iron and the coolant by the coolant spray nozzle 532 may be about 1 to 20 minutes. A coolant contact time between the hot briquetted iron and the retaining coolant W may be determined by the temperature of the retaining coolant W and the height of the water-level control plate 516. For example, if the temperature of the retaining coolant W exceeds an appropriate temperature, i.e. in the case of supplying a large amount of hot briquetted iron, it is possible to rapidly perform the cooling operation by increasing a supply flow rate of the retaining coolant W and thereby shortening a retention time of the retaining coolant W in the rotary body 510. If the temperature of the retaining coolant W is less than an appropriate temperature, i.e. in the case of supplying a small amount of hot briquetted iron, it is possible to extend the retention time of the retaining coolant W in the rotary body 510 by reducing the supply flow rate of the retaining coolant W.

The coolant spray module 530 may be differentially controlled such that the spray amount of a spray nozzle N1 closest to the outlet section 512 is maximum and a pressure loss is increased from a spray nozzle located at an outer position to a spray nozzle located at an inner position, thus reducing the coolant spray amount. In FIG. 3, the coolant spray nozzle 532 is denoted by reference numerals N1 to N4. However, this is only an example, and the present invention is not limited thereto.

Moreover, the coolant spray module 530 includes a coolant supply pipe 534 that is connected to the plurality of spray nozzles 532 to supply the coolant to each spray nozzle 532 at a constant pressure. By differentially applying the diameters of the spray nozzles 532 in a direction from the outlet section 512 to the inside, it is possible to differentially control the coolant spray amount.

Furthermore, as another example, the coolant spray module 530 may include the coolant supply pipe 534 that is connected to the plurality of spray nozzles 532 and is gradually reduced in the diameter of the pipe in the direction from the outlet section 512 to the inside, thus increasing a pressure loss and thereby differentially controlling the coolant spray amount.

As described above, the coolant spray module 530 is intended to minimize thermal cracks caused by a sudden cooling reaction between the hot briquetted iron 1 and the coolant. The coolant spray module may be implemented with a design using hydrodynamics including the concept of the pressure loss so as to differentially apply the spray amount of each coolant spray nozzle 532. As one example, by making the size and shape of the coolant supply pipe 534 constant and differentially applying the diameters of the respective spray nozzles N1, N2, N3, and N4, the pressure loss imparted to the spray nozzle for an associated position is increased in a direction from the outside of the rotary body 510 to the inside thereof, thus controlling an associated coolant spray amount. As another example, by making the diameters of the spray nozzles N1, N2, N3, and N4 constant and designing the pipe such that the diameter of the coolant supply pipe 534 is gradually reduced in a direction from a coolant inlet section to the inside of the rotary body 510, i.e. from N1 to N4, the coolant spray amount may be adjusted through a differential pressure loss. Therefore, it is advantageous in that a temperature distribution in the cooling apparatus is efficiently controlled through the coolant that is sprayed differently from the retaining coolant W.

The blade 520 may guide the hot briquetted iron such that the hot briquetted iron 1 is moved B towards the outlet section 512 while changing the movement mode of the hot briquetted iron 1 introduced into the rotary body 510.

For example, the movement mode may include a slip mode of the charging section 514 in which the hot briquetted iron performs a rotary movement at a minimum height to remain immersed in the retaining coolant, and a rolling mode of the outlet section 512 in which the active rotary movement of the hot briquetted iron is induced to increase a contact surface area with the coolant sprayed to the coolant spray module. Moreover, the movement mode may include a fall mode between the charging section 514 and the outlet section 512 to induce a rotary movement of the hot briquetted iron that is more active than that in the slip mode.

In the area where the hot briquetted iron 1 is first charged, i.e. in the slip mode, the rotary movement of the hot briquetted iron may be minimized and a sliding movement may be induced along a surface of the blade 520a. Therefore, it is possible to minimize damage to the hot briquetted iron due to a sudden motion associated with cooling at high temperature, and to perform cooling in a state where the hot briquetted iron is fully immersed in the retaining coolant W, thus improving the initial cooling efficiency of the hot briquetted iron. Moreover, in the central area of the rotary body 510, i.e. in the fall mode, the rotary movement of the hot briquetted iron is induced to be more active than that in the slip mode, thus minimizing damage to the hot briquetted iron in the rotary body 510 and gradually increasing the rotating height of the hot briquetted iron. In the discharge area of the hot briquetted iron, i.e. in the rolling mode, the rotary movement of the briquetted iron may become active, and the hot briquetted iron may be located at a height where the iron is directly cooled by the coolant spray module 530. Therefore, a vapor layer formed on a surface and acting as an obstacle to cooling efficiency due to the sprayed coolant is eliminated, and simultaneously, the contact surface area between the briquetted iron and the coolant is increased by the active rotary movement, thus further enhancing the cooling efficiency.

The blades 520 are formed such that angles between the blades and the outer circumference of the rotary body 510 are different from the charging section 514 to the outlet section 512, thus changing the movement mode. In other words, a blade 520a of the slip mode, a blade 520b of the fall mode, and a blade 520c of the rolling mode may have different angles with respect to the outer circumference of the rotary body 510. For example, in the slip mode, in order to induce sliding along the surface of the blade 520a of the hot briquetted iron, an angle θ1 of the blade 520a in the slip mode may be 0 to 10° to have a steep inclination angle with respect to the outer circumference of the rotary body 510. Furthermore, in the rolling mode, in order to locate the hot briquetted iron at a height where the iron may be directly cooled by the coolant spray module 530 as the rotary body 510 rotates, an angle θ3 of the blade 520c in the rolling mode may be 30 to 50° with respect to the outer circumference of the rotary body 510. Moreover, an angle θ2 of the blade 520b in the fall mode may be sequentially reduced between the angle θ1 of the blade 520a in the slip mode and the angle θ3 of the blade 520c in the rolling mode.

Therefore, the blade 520 guiding the movement of the hot briquetted iron in the cooling apparatus induces a change in movement mode of the hot briquetted iron 1 to cool the iron, thus minimizing damage to the hot briquetted iron due to sudden cooling in each cooling stage during the transfer, increasing the cooling surface area, efficiently eliminating the vapor layer formed on the surface of the hot briquetted iron, and thereby improving the cooling efficiency.

The cooling apparatus 50 of the hot briquetted iron may further include a rotary unit 550 that supports the outside of the rotary body 510 and rotates the rotary body 510. In order to support the inclined rotary body 510, the rotary unit 550 may be provided with a base frame F and a support body 558 including a support roller 552 and a guide roller 554. The support roller 552 provided between the base frame F and the rotary body 510 may support the rotary body 510 to prevent a rotating shaft of the rotary body 510 performing the rotary movement from being shaken. The guide roller 554 may fix the position of the rotary body 510 to prevent the rotary body from moving forwards and backwards along the inclined surface. Therefore, even if the rotary body 510 is inclined, the rotary movement for cooling the hot briquetted iron may be kept constant due to the support body 558.

Furthermore, the rotary unit 550 may be provided with a driving module 556 for rotating the rotary body 510. The driving module 556 may use a gear-type or chain-type driving method. For example, in the case of the gear-type driving method, the driving module 556 may include a motor that provides a driving force, a pinion gear that is mounted on the motor, and a driving gear that is formed on an outer surface of the rotary body 510 to engage with a pinion gear. Therefore, unlike the conventional cooling apparatus having a problem where durability is reduced due to frequent detachment of components caused by the coolant and the components should be frequently replaced, thus increasing maintenance cost, the rotary unit 550 that is a component required for driving the cooling apparatus of the hot briquetted iron is provided on the outside of the cooling apparatus, thus improving an equipment operation rate and improving productivity.

The rotary body 510 may have on an outer end thereof a screen module 540 that is used to separate coolant remaining on the outer circumference of the hot briquetted iron that is cooled and then discharged from the outlet section 512 and the hot briquetted iron from each other. Therefore, the remaining coolant separated by the screen module 540 is moved to the coolant discharge section 517 located under the outlet section 512, and is introduced into a cooling tower to be cooled again. Subsequently, the remaining coolant may be introduced into the rotary body 510 through the coolant spray module 530 by the coolant circulation pump. Moreover, the hot briquetted iron 1' that has been cooled may move from the screen module 540 to the briquetted-iron discharge section 515, and move through a transfer conveyor 60 to a storage space 70.

As described above, the present invention provides a cooling apparatus of hot briquetted iron, in which a temperature distribution in the cooling apparatus is controlled through retaining coolant and differentially sprayed coolant, thus maintaining a proper coolant supply distribution according to a position, and the cooling efficiency is increased for each position in a cooler, thus minimizing coolant consumption.

Moreover, a movement mode of hot briquetted iron is changed due to a blade for guiding the movement of hot briquetted iron in the cooling apparatus, thus minimizing damage to the hot briquetted iron during a transfer due to sudden cooling for each cooling stage, and increasing a cooling surface area, and a vapor layer formed on a surface of the hot briquetted iron is efficiently eliminated, thus improving cooling efficiency.

Although the present invention was described with reference to specific embodiments shown in the drawings, it is apparent to those skilled in the art that the present invention may be changed and modified in various ways without departing from the scope of the present invention, which is described in the following claims.

## Claims

1. A cooling apparatus of hot briquetted iron, comprising:
a cylindrical rotary body rotating while being inclined such that an outlet section through which cooled hot briquetted iron is discharged faces upwards, and including a water-level control plate formed under a hot-briquetted-iron charging section to retain a predetermined coolant;
a blade formed along an inner circumferential surface of the rotary body to guide the hot briquetted iron introduced therein towards the outlet section; and
a coolant spray module including a plurality of spray nozzles that differentially control an amount of the coolant sprayed inwards from the outlet section,
wherein the hot briquetted iron is primarily cooled by retained coolant, is guided by the blade, and is secondarily cooled by the coolant spray nozzles, thus maximizing cooling efficiency of the hot briquetted iron during a cooling process and thereby minimizing coolant consumption.

2. The cooling apparatus of claim 1, wherein the coolant spray module is differentially controlled such that a spray amount of a spray nozzle closest to the outlet section is maximum and a pressure loss is increased from a spray nozzle located at an outer position to a spray nozzle located at an inner position, thus reducing the coolant spray amount.

3. The cooling apparatus of claim 1, wherein the coolant spray module comprises a coolant supply pipe that is connected to the plurality of spray nozzles to supply the coolant to each spray nozzle at a constant pressure, and differentially controls the coolant spray amount by differentially applying diameters of the spray nozzles in a direction from the outlet section to an inside.

4. The cooling apparatus of claim 1, wherein the coolant spray module comprises a coolant supply pipe that is connected to the plurality of spray nozzles and is gradually reduced in the diameter of the pipe in a direction from the outlet section to an inside, thus increasing a pressure loss and thereby differentially controlling the coolant spray amount.

5. The cooling apparatus of claim 1, wherein the blade guides the hot briquetted iron such that the hot briquetted iron is moved towards the outlet section while changing a movement mode of the hot briquetted iron introduced into the rotary body.

6. The cooling apparatus of claim 5, wherein the movement mode comprises a slip mode of the charging section in which the hot briquetted iron performs a rotary movement at a minimum height to remain immersed in the retaining coolant, and a rolling mode of the outlet section in which an active rotary movement of the hot briquetted iron is induced to increase a contact surface area with the coolant sprayed to the coolant spray module.

7. The cooling apparatus of claim 6, wherein the movement mode comprises a fall mode between the charging section and the outlet section to induce a rotary movement of the hot briquetted iron that is more active than that in the slip mode.

8. The cooling apparatus of claim 5, wherein the blades are formed such that angles between the blades and an outer circumference of the rotary body are different from the charging section to the outlet section, thus changing the movement mode.

9. The cooling apparatus of claim 1, wherein the rotary body comprises on an outer end thereof a screen module that is used to separate coolant remaining on an outer circumference of the hot briquetted iron that is cooled and then discharged from the outlet section and the hot briquetted iron from each other.

10. The cooling apparatus of claim 1, further comprising: a rotary unit supporting an outside of the rotary body and rotating the rotary body.
